# EUROPEAN PATENT APPLICATION

(11) **EP 4 787 445 A1**
(43) Date of publication of application: **05.08.2026**
(21) Application number: 24871908.0
(22) Date of filing: 13.09.2024
(51) Int. Cl.: H01M 4/13, H01M 10/052, H01M 10/0587, H01M 50/586, H01M 50/595

(54) **NONAQUEOUS ELECTROLYTE SECONDARY BATTERY**

(30) Priority: 29.09.2023 JP 2023168971
(71) Applicant: Panasonic Energy Co., Ltd., Moriguchi-shi, Osaka 570-8511 (JP)
(72) Inventor: NATSUMEDA Syunsuke, Kadoma-shi, Osaka 571-0057 (JP)
(74) Representative: Novagraaf International SA
(86) International application number: PCT/JP2024/032834
(87) International publication number: WO 2025/070113

(57) **Abstract**

Provided is a nonaqueous electrolyte secondary battery in which deformation of a negative electrode is suppressed, while maintaining the battery capacity. This nonaqueous electrolyte secondary battery is provided with: a wound electrode body which is obtained by winding a band-like positive electrode and a band-like negative electrode, with a separator being interposed therebetween; and an outer package which houses the electrode body. The positive electrode has a positive electrode current collector and a positive electrode mixture layer that is formed on the surface of the positive electrode current collector. The positive electrode mixture layer has a first inclined region in which the thickness gradually decreases toward the winding start end, and a second inclined region in which the thickness gradually decreases toward the winding termination end. In the longitudinal direction of the positive electrode, the length L1 of the first inclined region and the length L2 of the second inclined region satisfy the relational expression L1 > L2.

## Description

### TECHNICAL FIELD

The present disclosure relates to non-aqueous electrolyte secondary batteries, and more particularly relates to a non-aqueous electrolyte secondary battery comprising a wound electrode assembly.

### BACKGROUND ART

Conventionally, non-aqueous electrolyte secondary batteries have widely been used, in which a wound electrode assembly formed by winding a strip-shaped positive electrode and negative electrode is housed in an outer casing. The positive electrode and the negative electrode each have a mixture layer containing an active substance on the surface of a current collector made of metal. Generally, the mixture layer is formed by applying liquid mixture slurry on the surface of the current collector and drying it, though depending on the viscosity or the like of the mixture slurry, the mixture layer may become locally thicker around a location where application of the mixture slurry ends.

Patent Literature 1 discloses a technology to suppress damage on the electrode due to an increased local thickness, in which at a start end portion and a terminal end portion of an application region where the mixture slurry is applied, an application amount of the mixture slurry is adjusted to form a slope shape so that the thickness of the mixture layer gradually reduces.

### CITATION LIST

### PATENT LITERATURE

PATENT LITERATURE 1: Japanese Unexamined Patent Application Publication No. 2010-108678

### SUMMARY

Incidentally, in secondary batteries with a wound electrode assembly housed in the outer casing, pressure acts on the electrode assembly from the outer casing when the electrode assembly expands during a charge and discharge cycle. In this case, there is a risk of an internal short circuit occurring in the electrode assembly due to bending or other deformation of the negative electrode that faces a winding inner end portion of the positive electrode. The technology disclosed in Patent Literature 1 does not take into account the deformation of the negative electrode when the electrode assembly expands, and therefore there is still room for improvement in terms of, for example, optimization of the shape of the slope. In addition, Patent Literature 1 discloses the technology of forming the same slope shape at the start end portion and the terminal end portion, though it does not take into account the fact that forming the slope shape decreases the volume of the mixture layer, resulting in a reduction in battery capacity.

It is an advantage of the present disclosure to provide a non-aqueous electrolyte secondary battery that restrains deformation of a negative electrode while maintaining battery capacity.

A non-aqueous electrolyte secondary battery in one aspect of the present disclosure comprises: a wound electrode assembly having a strip-shaped positive electrode and negative electrode wound with a separator in between; and an outer casing that houses the electrode assembly, in which the positive electrode includes a positive electrode current collector and a positive electrode mixture layer formed on a surface of the positive electrode current collector, the positive electrode mixture layer includes a first inclined region having a thickness gradually reduced toward a winding start end, and a second inclined region having a thickness gradually reduced toward a winding terminal end, and in a longitudinal direction of the positive electrode, a length L1 of the first inclined region and a length L2 of the second inclined region satisfy a relationship of L1 > L2.

According to the non-aqueous electrolyte secondary battery of the present disclosure, the deformation of the negative electrode can be restrained while the battery capacity can be maintained.

### BRIEF DESCRIPTION OF DRAWING

FIG. 1 is an axial sectional view of a cylindrical secondary battery as one example of an embodiment.
FIG. 2 is a perspective view of a wound electrode assembly comprised in the secondary battery shown in FIG. 1.
FIG. 3 is a sectional view showing in an expanded state the positional relationship between a positive electrode and a negative electrode that constitute the electrode assembly according to one example of the embodiment.

### DESCRIPTION OF EMBODIMENTS

Hereinafter, one example of an embodiment of a cylindrical secondary battery according to the present disclosure will be described in detail with reference to the drawings. In the following description, specific shapes, materials, numerical values, directions, or the like, are examples for easy understanding of the present disclosure, and they can be appropriately changed in accordance with the specifications of the cylindrical secondary battery. Moreover, when a plurality of embodiments or modifications are included in the following description, it is assumed from the beginning that their characteristic portions are combined and used as appropriate.

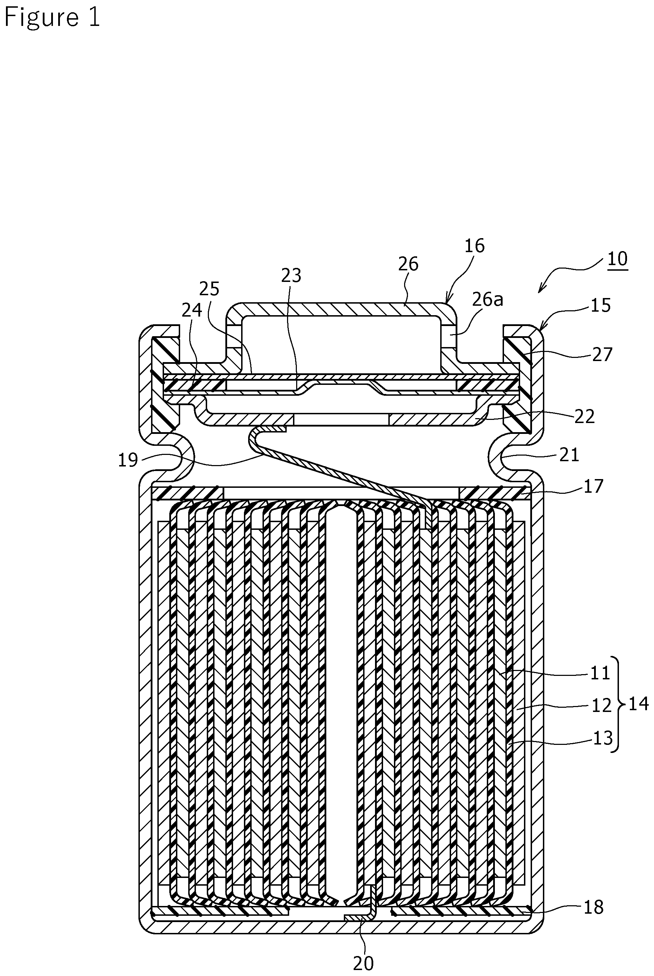

FIG. 1 is an axial sectional view of a cylindrical secondary battery 10 as one example of the embodiment. In the secondary battery 10 shown in FIG. 1, an electrode assembly 14 and non-aqueous electrolyte (not shown) are housed in an outer casing 15. The electrode assembly 14 has a wound structure in which a positive electrode 11 and a negative electrode 12 are wound with a separator 13 in between. As a non-aqueous solvent (organic solvents) of the non-aqueous electrolyte, there may be used carbonates, lactones, ethers, ketones, esters, or the like, and two or more of these solvents can be mixed and used. When two or more of these solvents are mixed and used, a mixed solvent containing cyclic carbonates and chain carbonates is preferably used. Examples of the cyclic carbonates to be used may include ethylene carbonate (EC), propylene carbonate (PC), and butylene carbonate (BC), and examples of the chain carbonates to be used may include dimethylcarbonate (DMC), ethylmethylcarbonate (EMC), and diethylcarbonate (DEC). As electrolyte salt of the non-aqueous electrolyte, LiPF₆, LiBF₄, LiCF₃SO₃, or the like and mixtures of these may be used. The amount of electrolyte salt dissolved in the non-aqueous solvent may be, for example, greater than or equal to 0.5 mol/L and less than or equal to 2.0 mol/L. Hereinafter, for the convenience of description, the side of a sealing assembly 16 is defined as "upper side", and a bottom side of the outer casing 15 is defined as "lower side".

The inside of the secondary battery 10 is sealed by closing an opening portion of the outer casing 15 with the sealing assembly 16. Insulating plates 17 and 18 are provided above and below the electrode assembly 14, respectively. A positive electrode lead 19 extends upward through a through-hole of the insulating plate 17 and is welded to the lower surface of a filter 22, which is a bottom plate of the sealing assembly 16. In the secondary battery 10, a cap 26, which is the top plate of the sealing assembly 16 electrically connected with the filter 22, serves as a positive electrode terminal. On the other hand, a negative electrode lead 20 extends toward a bottom of the outer casing 15 through a through-hole of the insulating plate 18, and is welded to the inner surface of the bottom of the outer casing 15. In the secondary battery 10, the outer casing 15 serves as a negative electrode terminal. Here, when the negative electrode lead 20 is installed in the vicinity of a winding terminal end, the negative electrode lead 20 extends toward the bottom of the outer casing 15 along the outside of the insulating plate 18, and is welded to the inner surface of the bottom of the outer casing 15.

The outer casing 15 is, for example, a metallic outer casing in a bottomed cylindrical shape. Between the outer casing 15 and the sealing assembly 16, a gasket 27 is provided to ensure sealability of the inside of the secondary battery 10. The outer casing 15 includes a grooved portion 21 formed by, for example, pressing a side surface portion from outside to support the sealing assembly 16. The grooved portion 21 is preferably formed in an annular shape along a circumferential direction of the outer casing 15 to support the sealing assembly 16 with its upper surface.

The sealing assembly 16 includes the filter 22, a lower vent member 23, an insulating member 24, an upper vent member 25, and the cap 26 stacked in this order from the side of the electrode assembly 14. Each member constituting the sealing assembly 16 has, for example, a disc shape or a ring shape, and each member except the insulating member 24 is electrically connected to each other. The lower vent member 23 and the upper vent member 25 are connected to each other at their respective center portions with the insulating member 24 interposed between their respective circumferential edge portions. When the internal pressure of the battery rises due to abnormal heat generation, the lower vent member 23 breaks, for example, and this causes the upper vent member 25 to swell toward the cap 26 and be separated from the lower vent member 23, so that the electrical connection between both members is cut off. As the internal pressure further rises, the upper vent member 25 breaks, so that gas is exhausted through an opening portion 26a of the cap 26.

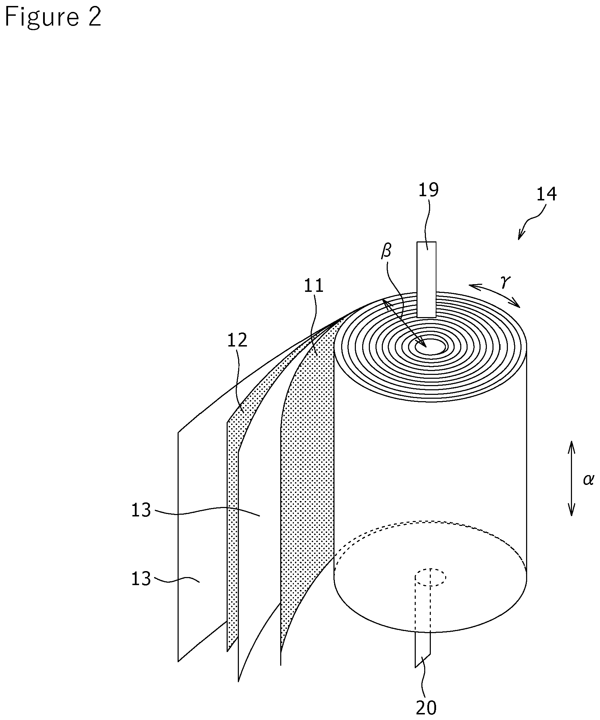

Description is now given of the electrode assembly 14 with reference to FIG. 2. FIG. 2 is a perspective view of the electrode assembly 14. The electrode assembly 14 has a winding structure in which the positive electrode 11 and the negative electrode 12 are wound in a spiral shape with the separator 13 in between as described above. The positive electrode 11, the negative electrode 12, and the separator 13, which are all formed into a strip shape, are wound in a spiral shape around a winding axis so as to be stacked alternately in a radial direction β of the electrode assembly 14. In the radial direction β, the side of the winding axis is referred to as a winding inner side, and its opposite side is referred to as a winding outer side. In the electrode assembly 14, the longitudinal direction of the positive electrode 11 and the negative electrode 12 is a winding direction γ, and the width direction of the positive electrode 11 and the negative electrode 12 is an axial direction α. In the winding direction γ, the side of the winding axis is referred to as a winding start side, and its opposite side is referred to as a winding terminal side. In the positive electrode 11 and the negative electrode 12, as well as in a first inclined region and a second inclined region described later, an end on the winding start side is referred to as a winding start end, and an end on the winding terminal side is referred to as a winding terminal end. At the upper end of the electrode assembly 14, the positive electrode lead 19 extends in the axial direction α from substantially the center in the radial direction extending from the center to the outermost circumference of the electrode assembly 14. At the lower end of the electrode assembly 14, the negative electrode lead 20 extends in the axial direction α from the vicinity of the winding axis.

As the separator 13, for example, a porous sheet with ion permeability and insulation properties is used. Specific examples of the porous sheet may include microporous thin films, woven fabrics, and non-woven fabrics. As the materials of the separator, olefin resin such as polyethylene and polypropylene, cellulose, and the like are preferable. The separator 13 may be a laminate having a cellulose fiber layer and a thermoplastic resin fiber layer made of olefin resin or the like. The separator 13 may be a multi-layer separator including a polyethylene layer and a polypropylene layer, and may also have a material, such as aramid resin and ceramic, coated on the surface thereof.

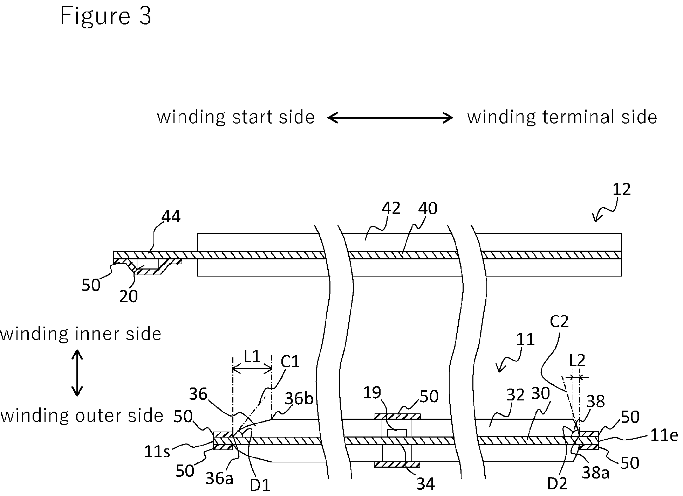

Detailed description is now given of the positive electrode 11 and the negative electrode 12 that constitute the electrode assembly 14 with reference to FIG. 3. FIG. 3 is a sectional view showing in an expanded state the positional relationship between the positive electrode 11 and the negative electrode 12 that constitute the electrode assembly 14 according to one example of the embodiment, the sectional view being along the longitudinal direction of the positive electrode 11 and the negative electrode 12.

The positive electrode 11 includes a strip-shaped positive electrode current collector 30 and a positive electrode mixture layer 32 formed on the surface of the positive electrode current collector 30. In the present embodiment, the positive electrode mixture layer 32 is formed on both the surfaces of the positive electrode current collector 30. Examples of the positive electrode current collector 30 to be used include a foil of metal such as aluminum or a film with the metal arranged on the surface thereof. The preferable positive electrode current collector 30 is a metal foil having aluminum or aluminum alloy as a main component. The positive electrode current collector 30 has a thickness of, for example, greater than or equal to 10 µm and less than or equal to 30 µm.

The positive electrode mixture layer 32 is formed over the entire region, except a positive electrode current collector exposed portion 34, on both the surfaces of the positive electrode current collector 30. The positive electrode current collector exposed portion 34 is a region where the surfaces of the positive electrode current collector 30 are not coated with the positive electrode mixture layer 32. The positive electrode mixture layer 32 preferably contains a positive electrode active material, a conductive agent, and a binding agent. The positive electrode 11 is fabricated by applying a positive electrode mixture slurry containing a positive electrode active material, a conductive agent, a binding agent, and a solvent such as N-methyl-2-pyrrolidone (NMP) to both surfaces of the positive electrode current collector 30 and then drying and rolling it. The positive electrode current collector exposed portion 34 is provided, for example, by intermittent application in which the positive electrode mixture slurry is not applied to some region of the positive electrode current collector 30.

Examples of the positive electrode active material to be used may include lithium-containing transition metal oxides, containing transition metal elements such as Co, Mn, and Ni. Although the lithium-containing transition metal oxides are not particularly limited, they are preferably compound oxides expressed by a general formula Li_{1 + x}MO₂ (in which -0.2 < x ≤ 0.2, where M includes at least one of the group consisting of Ni, Co, Mn, and Al).

As the conductive agent contained in the positive electrode mixture layer 32, there may be used, for example, acetylene black (AB), carbon black (CB) such as ketjen black, and carbon materials such as graphite. As the binding agent contained in the positive electrode mixture layer 32, there may be used, for example, fluororesin such as polytetrafluoroethylene (PTFE), and polyvinylidene difluoride (PVdF), polyacrylonitrile (PAN), polyimide (PI), acrylic resin, and polyolefin resin. These resins may be used together with carboxymethylcellulose (CMC) or its salts, polyethylene oxide (PEO), or the like. Any one of these materials may be used independently, or two or more of these materials may be used combinedly.

The positive electrode mixture layer 32 includes a first inclined region 36 having a thickness gradually reduced toward a winding start end 11s, and a second inclined region 38 having a thickness gradually reduced toward a winding terminal end 11e. As a result, when the electrode assembly expands, the vicinity of the winding start end 11s of the positive electrode 11 and the vicinity of the winding terminal end 11e of the positive electrode 11 apply less pressure to the negative electrode 12, and therefore deformation of the negative electrode 12 can be restrained. In addition, in the longitudinal direction of the positive electrode 11, a length L1 of the first inclined region 36 and a length L2 of the second inclined region 38 satisfy the relationship of L1 > L2. In the vicinity of the winding terminal end 11e, the pressure applied to the negative electrode 12 is smaller than that in the vicinity of the winding start end 11s, and the deformation of the negative electrode is less likely to occur. Therefore, setting L2 shorter than L1 can restrain the deformation of the negative electrode 12 while restraining the decrease in the battery capacity due to the inclined regions.

L1 preferably satisfies 1 mm ≤ L1 ≤ 20 mm, more preferably satisfies 1 mm ≤ L1 ≤ 10 mm, and further more preferably satisfies 2mm ≤ L1 ≤ 8mm. The lower limit of L2 is, for example, 0.5 mm.

For example, in the cross section along the longitudinal direction of the positive electrode 11, an angle of inclination D1 at a tip 36a of the first inclined region 36 and an angle of inclination D2 at a tip 38a of the second inclined region 38 satisfy the relationship of D1 < D2. The angle of inclination D1 and the angle of inclination D2 are, in other words, an angle D1 between a tangent C1 with respect to the tip 36a of the first inclined region 36 and the positive electrode current collector 30 and an angle D2 between a tangent C2 with respect to the tip 38a of the second inclined region 38 and the positive electrode current collector 30, respectively. Here, D1 refers to the angle less than or equal to 90°, among the angles between C1 and the positive electrode current collector 30, and the same is true for D2.

D1 satisfies, for example, 1° ≤ D1 ≤ 30°. D2 satisfies, for example, 3° ≤ D2 ≤ 60°.

As described above, the positive electrode mixture layer 32 includes a flat region having a substantially equal thickness at the center in the longitudinal direction and also includes inclined regions on both ends, the inclined regions being continuous with the flat region and having a thickness gradually reduced toward the ends. In the present embodiment, the first inclined region 36 and the second inclined region 38 each have a convex shape. In other words, for example, the first inclined region 36 has a shape that is protruding beyond a line segment connecting the tip 36a and an inclination start point 36b where inclination starts, and the angle of inclination of the first inclined region 36 is greatest at the tip 36a, gradually decreases from the tip 36a to the inclination start point 36b, and is substantially 0° at the inclination start point 36b. For example, the higher the viscosity of the positive electrode mixture slurry, the more likely the inclined regions are to have a convex shape. With the first inclined region 36 and the second inclined region 38 having such a convex shape, the pressure applied to the negative electrode 12 when the electrode assembly 14 expands can be made smaller. Here, the shape of the first inclined region 36 and the second inclined region 38 is not limited to the example of the present embodiment, and the angle of inclination from the tip 36a to the inclination start point 36b may be substantially the same, for example.

In the present embodiment, both the positive electrode mixture layer 32 on the winding inner side and the positive electrode mixture layer 32 on the winding outer side have the first inclined region 36 and the second inclined region 38. In this case, the first inclined region 36 and the second inclined region 38 preferably each have the same shape on the winding inner side and the winding outer side. Only one of the positive electrode mixture layer 32 on the winding inner side and the positive electrode mixture layer 32 on the winding outer side may have the first inclined region 36 and the second inclined region 38, and the other may not have the first inclined region 36 and the second inclined region 38.

In the present embodiment, the positive electrode 11 has the positive electrode current collector exposed portion 34, where the positive electrode current collector 30 is exposed, at the winding start end 11s and the winding terminal end 11e, and a protective tape 50 is stuck to the positive electrode current collector exposed portion 34. This makes it possible to restrain the deformation of the negative electrode 12 that is caused by the contact of the winding start end 11s and the winding terminal end 11e of the positive electrode 11 with the negative electrode 12. This is considered to be because the thickness of the winding start end 11s and the winding terminal end 11e of the positive electrode 11 is reduced and, furthermore, the protective tape 50 provides elasticity to the winding start end 11s and the winding terminal end 11e, thereby reducing pressure applied by the winding start end 11s and the winding terminal end 11e of the positive electrode 11 to the negative electrode 12.

The protective tape 50 has, for example, a base material layer and an adhesive layer formed on the surface of the base material layer. The protective tape has a thickness of, for example, greater than or equal to 20 µm and less than or equal to 70 µm, and preferably has a thickness of greater than or equal to 25 µm and less than or equal to 60 µm. The base material layer may contain organic and inorganic materials. The main component of the organic material contained in the base material layer is preferably resin with excellent insulation properties, electrolyte resistance, heat resistance, piercing strength, and the like. Specifically, the main component of the base material layer is preferably resin, such as polypropylene (PP), or other materials. The base material layer has a thickness of, for example, greater than or equal to 10 µm and less than or equal to 45 µm, and preferably has a thickness of greater than or equal to 15 µm and less than or equal to 35 µm. The adhesive layer is a layer to provide the protective tape with adhesiveness to the positive electrode 11. The adhesive layer is constituted of, for example, an acrylic-based adhesive or a synthetic rubber-based adhesive. The adhesive layer has a thickness of, for example, greater than or equal to 5 µm and less than or equal to 30 µm.

In the positive electrode current collector exposed portion 34 formed at the winding start end portion of the positive electrode 11, the positive electrode current collector 30 is preferably not joined to the positive electrode lead 19. In the present embodiment, the positive electrode current collector exposed portion 34 is also provided at substantially the center of the positive electrode 11 in a longitudinal direction γ, and at the positive electrode current collector exposed portion 34, the positive electrode lead 19 is joined to the positive electrode current collector 30. This enhances the current collectability. The positive electrode current collector exposed portion 34 that is joined to the positive electrode lead is also preferably provided on both the surfaces of the positive electrode 11 so as to overlap in the thickness direction of the positive electrode 11. The positive electrode current collector exposed portion 34 that is joined to the positive electrode lead 19 is preferably covered with the protective tape 50. In the width direction α, the width of the protective tape 50 may be wider than the width of the positive electrode 11. This makes it possible to cover the entire region of the positive electrode 11 in the width direction α and therefore the internal short circuit can be restrained more reliably. The shape, size, and material, or the like, of the protective tape 50, used in the positive electrode current collector exposed portion 34 that is joined to the positive electrode lead 19, may be identical to or different from those of the protective tape 50 used in the positive electrode current collector exposed portion 34 provided at the winding start end 11s and the winding terminal end 11e.

The negative electrode 12 includes a strip-shaped negative electrode current collector 40 and a negative electrode mixture layer 42 formed on surfaces of the negative electrode current collector 40. In the present embodiment, the negative electrode mixture layer 42 is formed on both the surfaces of the negative electrode current collector 40. For the negative electrode current collector 40, there may be used, for example, a foil of metal such as copper or a film with the metal arranged on the surface thereof. The negative electrode current collector 40 has a thickness of, for example, greater than or equal to 5 µm and less than or equal to 30 µm.

The negative electrode mixture layer 42 is formed over the entire region, except a negative electrode current collector exposed portion 44, on both surfaces of the negative electrode current collector 40. The negative electrode current collector exposed portion 44 is a region where the surfaces of the negative electrode current collector 40 are not coated with the negative electrode mixture layer 42. The negative electrode mixture layer 42 preferably contains a negative electrode active material and a binding agent. The negative electrode 12 is fabricated by, for example, applying a negative electrode mixture slurry containing a negative electrode active material, a binding agent, water, or the like to both surfaces of the negative electrode current collector 40 and then drying and rolling it. The negative electrode current collector exposed portion 44 is provided, for example, by intermittent application in which the negative electrode mixture slurry is not applied to some region of the negative electrode current collector 40.

The negative electrode active material is not particularly limited as long as it can reversibly store and release lithium ions, and there may be used, for example, carbon materials such as natural graphite and artificial graphite, metals that alloy with lithium, such as Si and Sn, or alloys containing these metals, and oxides thereof.

As the binding agent contained in the negative electrode mixture layer 42, there may be used, for example, the same resin as in the positive electrode 11, though in the case of preparing the negative electrode mixture slurry with aqueous solvent, styrene-butadiene rubber (SBR), CMC or its salt, polyacrylic acid or its salt, polyvinyl alcohol, or the like, may be preferably used. Any one of these materials may be used independently, or two or more of these materials may be used combinedly.

As shown in FIG. 3, the length of the negative electrode 12 in the longitudinal direction γ is greater than the length of the positive electrode 11 in the longitudinal direction γ, a winding start end of the negative electrode 12 is more on the winding start side than a winding start end 11s of the positive electrode 11, and a winding terminal end of the negative electrode 12 is more on the winding terminal side than a winding terminal end of the positive electrode 11. Although not shown in FIG. 3, the length of the negative electrode 12 in the width direction (axial direction) α is greater than the length of the positive electrode 11 in the width direction α. As a result, at least a region of the positive electrode 11 where the positive electrode mixture layer 32 is formed is arranged so as to face, via the separator 13, a region of the negative electrode 12 where the negative electrode mixture layer 42 is formed, so that lithium deposition in the negative electrode 12 can be prevented.

The negative electrode 12 has a negative electrode current collector exposed portion 44 in the vicinity of the winding start end. The negative electrode current collector exposed portion 44 is, for example, provided on both the surfaces of the negative electrode 12 so as to overlap in the thickness direction of the negative electrode 12. The negative electrode lead 20 is joined to the negative electrode current collector 40 at the negative electrode current collector exposed portion 44 on the winding outer side. The arrangement position of the negative electrode lead 20 is not limited to the example of the present embodiment, and the negative electrode lead 20 may be provided only in the vicinity of the winding terminal end of the negative electrode 12. The negative electrode lead 20 may also be provided in the vicinity of the winding start end and in the vicinity of the winding terminal end of the negative electrode 12. In this case, the current collectability is enhanced. The negative electrode current collector exposed portion 44 may be formed at the winding terminal end of the negative electrode 12, and the negative electrode current collector exposed portion 44 may be brought into contact with the inner circumferential surface of the outer casing 15 (see FIG. 1) so as to electrically connect the vicinity of the winding terminal end of the negative electrode 12 to the outer casing 15 without using the negative electrode lead 20.

In the negative electrode current collector exposed portion 44 on the winding outer side of the negative electrode 12, an insulating protective tape 50 is stuck over the negative electrode lead 20. The protective tape 50 restrains an internal short circuit in the negative electrode lead 20. In the width direction α, the width of the protective tape 50 may be wider than the width of the negative electrode 12. This makes it possible to cover the entire region of the negative electrode 12 in the width direction α and therefore the internal short circuit can be restrained more reliably. The shape, size, and material, or the like, of the protective tape 50, used in the negative electrode current collector exposed portion 44 that is joined to the negative electrode lead 20, may be identical to or different from those of the protective tape 50 used in the positive electrode current collector exposed portion 34 provided in the positive electrode 11.

As described above, the non-aqueous electrolyte secondary battery 10 according to the present disclosure comprises the positive electrode 11 including the first inclined region 36 and the second inclined region 38 each having an optimal shape, which makes it possible to restrain the deformation of the negative electrode 12 while maintaining the battery capacity.

The present disclosure is further described with the embodiment described below.

### Configuration 1:

A non-aqueous electrolyte secondary battery, comprising: a wound electrode assembly having a strip-shaped positive electrode and negative electrode wound with a separator in between; and an outer casing that houses the electrode assembly, in which the positive electrode includes a positive electrode current collector and a positive electrode mixture layer formed on a surface of the positive electrode current collector, the positive electrode mixture layer includes a first inclined region having a thickness gradually reduced toward a winding start end, and a second inclined region having a thickness gradually reduced toward a winding terminal end, and in a longitudinal direction of the positive electrode, a length L1 of the first inclined region and a length L2 of the second inclined region satisfy a relationship of L1 > L2.

### Configuration 2:

The non-aqueous electrolyte secondary battery according to Configuration 1, in which the L1 satisfies 1 mm ≤ L1 ≤ 20 mm.

### Configuration 3:

The non-aqueous electrolyte secondary battery according to Configuration 1 or 2, in which in a cross section along the longitudinal direction of the positive electrode, an angle of inclination D1 at a tip of the first inclined region and an angle of inclination D2 at a tip of the second inclined region satisfy a relationship of D1 < D2.

### Configuration 4:

The non-aqueous electrolyte secondary battery according to Configuration 3, in which the D1 satisfies 1° ≤ D1 ≤ 30°.

### Configuration 5:

The non-aqueous electrolyte secondary battery according to any one of Configurations 1 to 4, in which the positive electrode has a positive electrode current collector exposed portion, where the positive electrode current collector is exposed, at the winding start end and the winding terminal end, and a protective tape is stuck to the positive electrode current collector exposed portion.

### REFERENCE SIGNS LIST

10 Secondary battery, 11 Positive electrode, 11s Winding start end, 11e Winding terminal end, 12 Negative electrode, 13 Separator, 14 Electrode assembly, 15 Outer casing, 16 Sealing assembly, 17, 18 Insulating plate, 19 Positive electrode lead, 20 Negative electrode lead, 21 Grooved portion, 22 Filter, 23 Lower vent member, 24 Insulating member, 25 Upper vent member, 26 Cap, 26a Opening portion, 27 Gasket, 30 Positive electrode current collector, 32 Positive electrode mixture layer, 34 Positive electrode current collector exposed portion, 36 First inclined region, 38 Second inclined region, 40 Negative electrode current collector, 42 Negative electrode mixture layer, 44 Negative electrode current collector exposed portion, 50 Protective tape

## Claims

1. A non-aqueous electrolyte secondary battery, comprising:
a wound electrode assembly having a strip-shaped positive electrode and negative electrode wound with a separator in between; and
an outer casing that houses the electrode assembly, wherein
the positive electrode includes a positive electrode current collector and a positive electrode mixture layer formed on a surface of the positive electrode current collector,
the positive electrode mixture layer includes a first inclined region having a thickness gradually reduced toward a winding start end, and a second inclined region having a thickness gradually reduced toward a winding terminal end, and
in a longitudinal direction of the positive electrode, a length L1 of the first inclined region and a length L2 of the second inclined region satisfy a relationship of L1 > L2.

2. The non-aqueous electrolyte secondary battery according to claim 1, wherein the L1 satisfies 1 mm ≤ L1 ≤ 20 mm.

3. The non-aqueous electrolyte secondary battery according to claim 1, wherein in a cross section along the longitudinal direction of the positive electrode, an angle of inclination D1 at a tip of the first inclined region and an angle of inclination D2 at a tip of the second inclined region satisfy a relationship of D1 < D2.

4. The non-aqueous electrolyte secondary battery according to claim 3, wherein the D1 satisfies 1° ≤ D1 ≤ 30°.

5. The non-aqueous electrolyte secondary battery according to claim 1, wherein
the positive electrode has a positive electrode current collector exposed portion, where the positive electrode current collector is exposed, at the winding start end and the winding terminal end, and
a protective tape is stuck to the positive electrode current collector exposed portion.
